# Europäisches Patentamt

## European Patent Office

## Office européen des brevets

(11) Numéro de publication: **0 100 260**

**B1**

(12) **FASCICULE DE BREVET EUROPEEN**

(45) Date de publication du fascicule du brevet: **07.10.87**

(21) Numéro de dépôt: **83401406.0**

(22) Date de dépôt: **07.07.83**

(51) Int. Cl.⁴: **H 04 L 9/00,** G 07 F 7/10

(54) Procédé pour certifier la provenance d'au moins une information enregistrée dans une mémoire d'un premier dispositif électronique et transmise à un deuxième dispositif électronique.

(30) Priorité: **08.07.82 FR 8212021**

(43) Date de publication de la demande:
**08.02.84 Bulletin 84/06**

(45) Mention de la délivrance du brevet:
**07.10.87 Bulletin 87/41**

(84) Etats contractants désignés:
**CH DE FR IT LI NL SE**

(56) Documents cités:
**EP-A-0 028 965
EP-A-0 029 894
EP-A-0 030 381
US-A-3 654 604
US-A-4 320 387**

(73) Titulaire: **BULL S.A.
121, Avenue de Malakoff
F-75016 Paris (FR)**

(72) Inventeur: **Saada, Charles José
94 avenue Gambetta
F-75960 Paris Cedex 20 (FR)**
Inventeur: **Mollier, Jean Henri
94 Avenue Gambetta
F-75960 Paris Cedex 20 (FR)**

(74) Mandataire: **Doireau, Marc et al
BULL S.A. Industrial Property Department 25
avenue de la Grande-Armée
F-75016 Paris (FR)**

## Description

L'invention concerne généralement les problèmes relatifs au contrôle de la validité des informations transmises à partir d'un dispositif électronique possédant au moins une mémoire où sont enregistrées ces informations, et a plus particulièrement pour objet un procédé pour certifier ou authentifier la provenance d'au moins une information enregistrée dans une mémoire d'un premier dispositif électronique et transmise à un deuxième dispositif électronique.

Il va être exposé ci-après le problème général.

L'essor de la télématique a mis en évidence un problème nouveau comment se faire reconnaître, à distance ou non, par un correspondant qui ne nous connaît pas personnellement ou par un système informatique auquel on veut s'adresser à partir d'un terminal par exemple.

Cet essor s'est notamment concrétisé par l'apparition de supports électroniques portatifs et amovibles tels que des cartes incluant un microprocesseur et une mémoire non volatile protégée. Ces cartes ont permis d'entrevoir un vaste champ d'applications, notamment axées vers le grand public.

En effet, grâce à la personnalisation de ces cartes par des informations préenregistrées dans leurs mémoires, il a été possible de concevoir et de mettre au point des systèmes qui permettent d'habiliter des personnes ou des organismes à effectuer des opérations protégées propres aux applications envisagées. Parmi ces applications, on peut citer l'accès à des services de tout type comme par exemple l'accès à des locaux ou enceintes protégés, à des services télématiques, à des banques de données, ....

D'une façon générale, toutes ces applications donnent naissance à un échange d'informations sous la forme d'un dialogue institué, par exemple et à titre non limitatif:

—soit entre au moins une carte détenue par une personne physique ou morale et un système qui est conçu pour rendre un service déterminé ou donner accès à un milieu protégé;

—soit entre deux cartes détenues respectivement par deux personnes physiques et/ou morales;

—soit entre deux systèmes informatiques.

Dès l'instant où il y a un échange d'informations, notamment confidentielles, il est impératif de mettre en place des contrôles chargés essentiellement de vérifier, d'une façon générale, la preuve de l'appartenance d'une carte à son détenteur, l'identification des correspondants, la validité des informations transmises ou échangées. Bien entendu, ces contrôles sont fonctions des applications envisagées et ils sont d'autant plus impératifs, qu'il faut obligatoirement associer la notion de fraude à la notion d'accès protégé ou de service protégé.

En effet, le détenteur d'une carte sera plus ou moins amené à se poser des questions du type:

—N'est-il pas possible avec ma carrte d'accèder à des services auxquels je n'ai normalement pas accès?

—N'est'il pas possible, dans le cas d'un service payant, d'accéder à ce service gratuitement?

—N'est-il pas possible avec ma carte de me faire passer pour une autre personne?

—N'est-il pas possible d'utiliser la carte d'une autre personne à la place de la mienne?;

Ces questions reviennent à poser le problème du degré de sureté ou d'inviolabilité de ces systèmes à cartes.

L'invention vise principalement à apporter une solution qui permettre de certifier de façon sûre la provenance d'une information transmise à partir d'une carte, c'est-à-dire une solution qui décèle toute intervention d'un fraudeur dans le système de transmission tendant à modifier les informations transmises. Cette solution permet dont de certifier qu'une information reçue provient bien sans altération possible d'une carte déterminée où elle est obligatoirement préenregistrée, généralement de façon permanenté notamment dans une zone protégée de la mémoire de la carte.

Pour mieux appréhender la solution conforme à l'invention, il est nécessaire d'expliciter en détail l'are antérieur.

Une solution antérieure a consisté à mettre en place un contrôle essentiellement basé sur la reconnaissance d'identités ou de droits représentés par des informations préenregistrées dans des zones protégées de la mémoire de la carte délivrée à une personne par un organisme dûment habilité. Cette reconnaissance consiste également à utiliser des clés aléatoires et fugitives de façon à empêcher un fraudeur de reproduire une séquence de dialogue antérieur entre un système dispensateur d'un service et la carte, séquence ayant permit un accès licite à une enceinte protégée ou à un service. Une telle solution est notamment décrite dans le brevet français No. 2 469 760 de la demanderesse et intitulé: "Procédé et système d'identification de personnes demandant l'accès à certains milieux", ce système étant dénommé "TELEPASS".

Il va être décrit ci-après le principe du brevet "TELEPASS".

Ce brevet antérieur décrit un procédé permettant de faire certifier par un équipement électronique dispensateur d'un service et dénommé ci-après serveur, qu'une information I se trouve bien dans la carte connectée à ce serveur, mais à condition que ce dernier détienne lui-même cette même information I.

la carte possède au moins une mémoire non volatile et des circuits électroniques de traitement tels qu'un microprocesseur. Dans des zones protégées de la mémoire de la carte sont au moins enregistrés:

—une information I représentative d'une identité ou d'un droit d'accès;

—un jeu secret S seul connu de l'organisme émetteur dûment habilité (seuls les individus

dont les cartes ont le même jeu secret et qui font donc partie d'une même population peuvent dialoguer entre eux);

—et un algorithme f uniquement connu du fabricant de la carte.

Au niveau du serveur, il est également prévu au moins des circuits de traitement et au moins une mémoire dans laquelle sont au moins enregistrées les mêmes informations que celles enregistrées dans la mémoire de la carte.

le problème qui se pose est le suivant: comment le serveur va pouvoir être certain qu'une information I qui lui est présentée provient bien de la carte.

Cette certification de l'information I s'effectue à la suite d'un dialogue qui s'instaure entre le serveur et la carte, dialogue qui se déroule de la façon suivante:

—le serveur lit l'information I à certifier (I étant par exemple un code identifiant le porteur ou détenteur de la certe) et préenregistrée dans la mémoire de la carte;

—le serveur vérifie qu'il possède bien lui-même cette information I préalablement stockée dans un fichier contenant les identités ou les droits de toutes les personnes susceptibles d'accèder au service rendu par ce serveur;

—si l'information I est retrouvée dans le fichier du serveur, celui-ci, par l'intermédiaire d'un générateur de nombres aléatoires, envoie un nombre aléatoire E à la carte;

—la carte et le serveur calculent un résultat R par l'intermédiaire de leurs circuits de traitement respectifs, ces résultats provenant du déroulement du même algorithme f précité qui prend en compte les paramètres suivants: I (information à certifier), E (nombre aléatoire précité) et S (jeu secret précité);

—la carte transmet son résultat R au serveur qui le compare avec le résultat qu'il a lui-même calculé;

—s'il y a identité entre les deux résultats R, le serveur peut certifier que l'information I est bien présente dans la carte.

Certe identité entre les deux résultats R se produit si la. carte et le serveur possèdent le même jeu secret S et le même algorithme f, et si l'information I de la carte est contenue dans le fichier du serveur.

D'après ce qui précède, il est logique de se poser la question de savoir si le détenteur d'une carte n'ayant normalement pas accès à un serveur déterminé peut simuler un dialogue plausible avec le serveur pour tenter de se faire délivrer le service. Les seules informations accessibles de l'extérieur sont l'information à certifier I, le nombre aléatoire E et le résultat R calculé par la carte. Le fraudeur sera donc tenté d'envoyer au serveur une information d'identification $I_X$ d'un individu X appartenant à la même population que lui et dont il sait qu'elle est enregistrée dans le fichier du serveur. Dans ces conditions, l'individu A détenteur d'une carte l'identifiant par une information $I_A$ va s'arranger pour transmettre au serveur l'information $I_X$ de l'individu X à la place de l'information $I_A$ contenue dans sa carte. Le serveur va bien retrouver cette information $I_X$ dans son fichier, envoyer un nombre aléatoire E à la carte de l'individu A pour que cette dernière calcule le résultat R. Ce résultat R sera automatiquement différent de celui calculé par le serveur, étant donné que le calcul de R au niveau de la carte de l'individu A prend en compte l'information d'identification de cette carte, à savoir l'information $I_A$, alors que le serveur prend en compte l'information $I_X$. Dans ces conditions, le fraudeur devra donc substituer au résultat R calculé normalement par sa carte, le résultat R calculé par le serveur. Pour cela, il faut qu'il puisse déterminer à l'avance ce résultat R. Cela est impossible, du fait que la fraudeur ne connait pas l'algorithme f et le jeu secret S de sa carte.

Toutefois, il n'est pas exclu que le fraudeur puisse générer un résultat R exact, bien que la probabilité soit très faible. Pour augmenter encore la sécurité du système, il suffit de ne pas transmettre les informations d'identification I entre la carte et le serveur, mais uniquement une addresse qui permettre de retrouver l'information I à certifier dans le fichier du serveur. Ainsi, si le fraudeur modifie cette adresse, l'information adressée dans le fichier du serveur sera obligatoirement différente de l'information d'identification contenue dans la carte, ce que donnera des résultats R différents au niveau de la carte et au niveau du serveur. Cette amélioration n'est évidemment possible que si le fichier est parfaitement gargé secret.

En conclusion, un gel système présente une très grande sécurité vis-à-vis des tentatives de fraude. Cependant, ce système impose nécessairement que l'information I à certifier soit à la fois présente dans la carte et dans le serveur. De plus, ce système ne prévoit qu'une reconnaissance à sens unique, puisqu'il n'y a qu'une seule relation de subordination entre la carte et le serveur. En effet, la carte doit prouver son identité ou ses droits au serveur, c'est-à-dire qu'il n a pas une reconnaissance mutuelle entre la carte et le serveur.

Il va être décrit ci-après les insuffisances du système TELEPASS.

Le fichier précité peut prendre en fonction des applications envisagées, des dimensions allant au-delà de l'espace mémoire autorisé. Cela sera notamment le cas où il n'y a plus un dialogue entre une carte et un serveur, mais un dialogue entre deux cartes, l'espace mémoire disponible dans une carte étant alors limité. Dans ces conditions, un individu A détiendra dans sa carte une information proper ou identité $I_A$ et un second individu B possèdera dans la sienne une information propre ou identité $I_B$: d'où le problème suivant: comment ces deux correspondants pourront-ils se transmettre ces informations en tant qu'informations certifiées sachant que la carte de l'individu B ne contient pas l'information $I_A$ et que la carte de l'individu A ne contient pas l'information $I_B$. Il va être démontré ci-dessous que le système TELEPASS ne peut pas résoudre ce problème.

La carte de l'individu A est accouplée à un dispositif de liaison dénommé ci-après automate $A_A$, la carte de l'individu B est accouplée à un autre dispositif de liaison, similaire ou automate $A_B$, les deux dispositifs de liaison étant reliés entre eux par une voie de transmission classique.

La carte de l'individu A contient une information $I_A$ à certifier, un jeu secret S et un algorithme f, alors que l'automate $A_A$ associé inclut un générateur de nombres aléatoires et un circuit de comparaison. La carte de l'individu B contient une information $I_B$ à certifier, le même jeu secret S, le même algorithme f, alors que son automate $A_B$ associé inclut également un générateur de nombres aléatoires et un circuit de comparaison. Les deux individus A et B appartiennent nécessairement à un même population, caractéristique reconnaissable par le fait qu'ils possèdent dans leur carte le même jeu secret S. Bien évidemment, si les deux individus A et B font partie de deux populations différentes, il n'y a pas de reconnaissance possible. Le dialogue entre les deux cartes des deux individus A et B est le suivant, en supposant que l'individu A veuille se faire reconnaître de l'individu B:

—l'automate associé à la carte de l'individu A, lit dans la carte l'information à certifier $I_A$ (identité de l'individu A) et transmet cette information $I_A$ à l'automate $A_B$ associé à la carte de l'individu B ainsi qu'un nombre aléatoire $E_A$;

—en réponse, l'automate de liaison $A_B$ transmet à l'automate $A_A$ l'information à certifier $I_B$ (identité de l'individu B) lue dans la carte de l'individu B et un nombre aléatoire $E_B$;

—les automates $A_A$ et $A_B$ demandent aux cartes des individus A et B de calculer chacune un résultat correspondant au déroulement du même algorithme f qui prend en compte les paramètres suivants $I_A$, $E_B$ et S, soit $K_1$ le résultat calculé par la carte de l'individu A et $R_2$ le résultat calculé par la carte de l'individu B;

—l'automate $A_A$ associé à la carte de l'individu A transmet le résultat $K_1$ à l'automate $A_B$ accouplé à la carte de l'individu B;

—le circuit comparateur de l'automate $A_B$ associé à la carte de l'individu B compare alors les résultats $K_1$ et $R_2$.

Même s'il y a identité entre les deux résultats $K_1$ et $R_2$, il sera démonté plus loin que l'individu B ne peut pas pour autant certifier que l'information $I_A$ provient bien de la carte $C_A$ avec laquelle il dialogue.

L'individu A voudra également certifier l'information $I_B$ de l'individu B. Pour cela, la carte de l'individu A calculera un résultat $R_1$ en déroulant l'algorithme f qui prend en compte sa propre identité $I_A$, le nombre aléatoire $E_A$ transmis par son automate de liaison, et le jeu secret S. De son côtré la carte de l'individu B calculera un résultat $R_2$ prenant en compte les mêmes paramètres. Ensuite, l'automate $A_B$ associé à la carte de l'individu B enverra sont résultat $K_2$ au circuit de comparaison de l'automate $A_A$ associé à la carte de l'individu A afin de comparer ce résultat $K_2$ avec le résultat $R_1$.

Comme précédemment, l'identité entre les deux résultats $R_1$ et $K_2$ ne permet pas à l'individu A d'en déduire que l'information $I_B$ reçue provient bien de la carte $C_B$ avec laquelle il dialogue.

En effet, il est tout à fait possible à un individu A de se faire passer pour un individu X vis-à-vis d'un individu B, ces trois individus appartenant à une même population.

Supposons que l'individu A veuille se faire passer, vis-à-vis de l'individu B, pour l'individu X. Dans ces conditions, il transmet à l'automate $A_B$ associé à la carte de l'individu B l'information $I_X$ proper à l'individu X. L'automate $A_B$ associé à la carte de l'individu B envoie alors l'identité $I_B$ et un nombre aléatoire $E_B$ à l'automate $A_A$ de la carte de l'individu A et demande à la carte de l'individu B de calculer un résultat $R_2=f (E_B, S, I_X)$. La carte de l'individu A calcule alors un résultat $K_1=f (E_B, S, I_A)$. Ensuite, l'automate $A_B$ associé à la carte de l'individu B demande le résultat $K_1$ calculé par la carte de l'individu A. Ces résultats seront automatiquement différents puisque le résultat calculé au niveau de la carte de l'individu A prend obligatoirement en compte l'identité $I_A$ contenue dans sa carte, alors que le résultat calculé au niveau de la carte de l'individu B prendra en compte l'information transmise par la carte de l'individu A, à savoir l'information $I_X$ substituée par le fraudeur à sa propre information d'identification $I_A$. Dans ce conditions, le fraudeur doit substituer au résultat calculé par sa carte, le résultat calculé par l'autre carte. Il doit donc déterminer à l'avance ce résultat. Cela lui est tout à fait possible, car il lui suffit de rentrer dans sa carte l'identification $I_X$ à la place de l'identification $I_B$ envoyée par la carte de l'individu B, de faire calculer un résultat R prenant en compte cette identité $I_X$ et envoyer ce résultat à la carte de l'individu B.

Ainsi, l'individu B ne peut pas être certain de la provenance de l'information $I_A$ et vice versa pour l'individu A, étant donné qu'une intervention frauduleuse est possible dans le système de transmission reliant les deux cartes, notamment au niveau des automates.

L'invention vise à pallier cet inconvénient en permettant justement à l'individu B de certifier l'information $I_A$ transmise à partir de la carte de l'individu A et à l'individu A de certifier la provenance d'une information $I_B$ transmise à partir de la carte de l'individu B, sachant que la carte de l'individu A ne contient pas l'information $I_B$ et que la carte de l'individu B ne contient pas l'information $I_A$. Autrement dit, chaque correspondant dira non seulement par carte quelque chose à l'autre correspondant, mais chaque correspondant disposera en plus d'un moyen de vérifier que ce qu'il reçoit est vrai et non altéré lors de la transmission en provenance de la carte de l'autre correspondant.

A cet effet, l'invention propose un procédé pour certifier la provenance d'au moins une information $I_A$ enregistrée dans la mémoire d'un premier dispositif électronique $C_A$ détenu par un individu A, cette information $I_A$ propre à l'individu A étant transmise pour certification à un deuxième dispositif électronique $C_B$ détenu par un individu B dont au moins une information propre $I_B$ est préenregistrée dans la mémoire du deuxième dispositif électronique $C_B$; du type consistant:

—à transmettre l'information $I_A$ au dispositif $C_B$,

—à faire calculer au niveau de chaque dispositif $C_A$, $C_B$ un résultat R calculé par un même algorithme secret f prédéterminé et prenant en compte un même jeu secret S prédéterminé, un même nombre aléatoire $E_B$ fourni par le deuxième dispositif électronique $C_B$ et l'information $I_A$,

—à transmettre au second dispositif $C_B$ le résultat R calculé par le premier dispositif $C_A$,

—et à comparer, au niveau du deuxième dispositif $C_B$, les deux résultats R, l'identité entre ces deux résultats R certifiant à l'individu B que le premier dispositif $C_A$ fait partie du même groupe que son dispositif $C_B$, du fait que les deux dispositifs contiennent le même jeu secret S et même algorithme f,

caractérisé en ce qu'il consiste, pour permettre à l'individu B de certifier la provenance de l'information $I_A$,

—à faire prendre en compte par l'algorithme f, un paramètre supplèmentaire J qui prend lui-même en compte les deux informations $I_A$, $I_B$ combinées suivant un même algorithme secret p prédéterminé et échangées entre les deux dispositifs $C_A$, $C_B$;

—et ainsi à faire calculer par le premier dispositif $C_A$, un résultat $R=f(E_B, S, J)$ avec $J=p(I_A, I_B)$ et par le deuxième dispositif un résultat $R=f(E_B, S, J)$ avec $J=p(I_B, I_A)$, l'algorithme p étant symétrique de façon à ce que $J=p(I_A, I_B)=p(I_B, I_A)$, et pouvoir ainsi faire certifier par l'individu B, dans le cas d'une égalité entre ces deux résultats R, que l'information $I_A$ n'a pas été modifiée au cours de son transfert entre les deux dispositifs électroniques ($C_A$, $C_B$).

Bien entendu, ce même procédé s'applique pour que l'individu A certifie à son tour la provenance de toute information transmise à partir de la carte de l'individu B. Un tel procédé permet ainsi une reconnaissance mutuelle entre deux individus d'une même population, sans que la carte d'un individu contienne toutes les informations propres de tous les individus de la population avec lesquels il peut dialoguer.

L'avantage fondamental de ce procédé est qu'il ne permet pas à un individu d'une population de sa faire passer, vis-à-vis d'un autre individu ce cette même population, pour un individu appartenant également à cette même population même si une intervention frauduleuse se produisait sur le système de transmission entre les deux cartes.

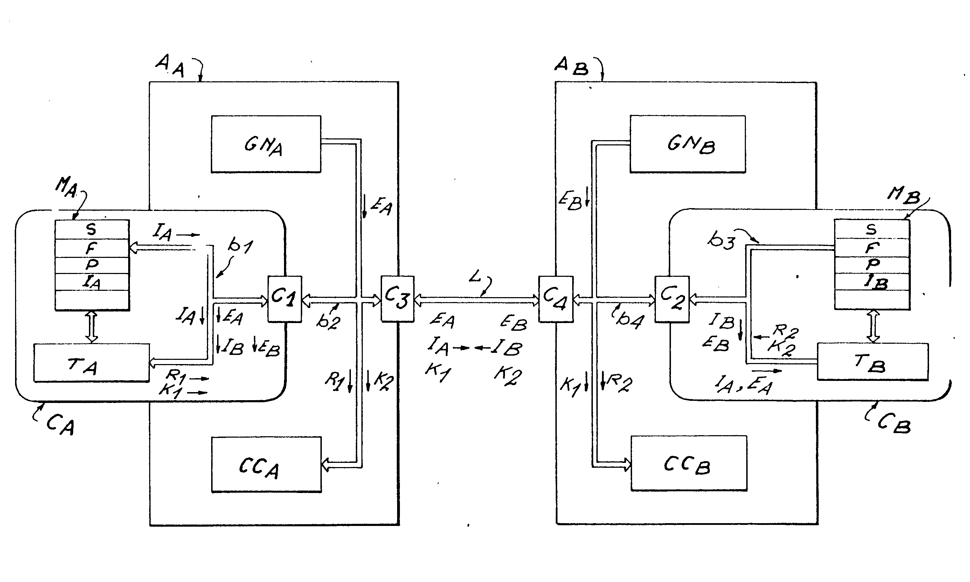

D'autres caractéristiques, avantages et détails ressortiront de la description explicative qui va suivre faite en référence au dessin annexé donné uniquement à titre d'exemple et dans lequel est schématiquement représenté un système permettant la mise en oeuvre du procédé.

Dans l'exemple qui va suivre, on considère que les dispositifs électroniques précités sont avantageusement portatifs et amovibles tels que des cartes.

En se reportant au dessin, supposons un individu A possédant une carte $C_A$ et un individu B possédant une carte $C_B$.

La carte $C_A$ de l'individu A comprend au moins:

—une mémoire non volatile $M_A$ dans laquelle sont enregistrés: une information $I_A$ propre à l'individu A, un jeu secret S identifiant la population à laquelle appartient l'individu A; un algorithme secret f prédéterminé; et un algorithme secret p prédéterminé;

—et des circuits de traitement $T_A$ constitués par exemple par un microprocesseur.

La carte $C_B$ de l'individu B inclut une mémoire $M_B$ contenant les mêmes informations que celles de la mémoire $M_A$ de la carte $C_A$, à la seule différence que l'information $I_A$ est remplacée par une information $I_B$ qui est propre à l'individu B; et des circuits de traitement $T_B$.

La connection entre les deux cartes $C_A$ et $C_B$ peut être la suivante. L'individu A accouple sa carte $C_A$ à un dispositif de liaison dénommé ci-après automate $A_A$, par l'intermédiaire d'un interface de couplage $C_1$. Cette automate comprend un générateur de nómbres aléatoires GNA et un circuit de comparaison CCA. Les différentes éléments inclus dans la carte $C_A$ sont reliés par un bus $b_1$, alors que les éléments constitutifs de l'automate $A_A$ sont reliés par un bus de liaison $b_2$.

La carte $C_B$ de l'individu B est accouplée, d'une façon identique, à un automate $A_B$ per l'intermédiaire d'un interface de couplage $c_2$. Cet automate $A_B$ comprend au moins un générateur de nombres aléatoires GNB et un circuit de comparaison CCB. Les éléments constitutifs de la carte $C_B$ sont reliés entre eux par l'intermédiaire d'un bus $b_3$, alors que les éléments de l'automate $A_B$ sont reliés par un bus $b_4$.

Enfin, ces deux automates $A_A$ et $A_B$ sont reliés entre eux par une voie de transmission L, connue en soi, connectée à l'automate $A_A$ par l'intermédiaire d'un interface de couplage $C_3$ et à l'automate $A_B$ par un interface de couplage $C_4$. Supposons au départ que l'individu A, détenteur de la carte $C_A$, désire dialoguer avec l'individu B détenteur de la carte $C_B$. Une fois ces deux cartes reliées entre elles par l'intermédiaires des automates $A_A$, $A_B$ et de la ligne de transmission L, le dialogue entre les deux individus A et B, via leurs cartes $C_A$ et $C_B$, s'établit comme suit:

—l'automate $A_A$ accouplé à la carte $C_A$ de l'individu A envoie l'automate B accouplé à la carte $C_B$ de l'individu B, l'information $I_A$ et qui est préenregistrée dans la mémoire $M_A$ de la carte $C_A$;

—la carte $C_B$ de l'individu B ne peut pas certifier la provenance de l'information $I_A$, puisqu'elle ne possède pas de fichier préétabli dans lequel elle est susceptible de retrouver l'information $I_A$; dans ces conditions, l'automate $A_B$ accouplé à la carte $C_B$ envoie en réponse à l'automate $A_A$ un nombre aléatoire $E_B$ qui est délivré par le générateur de nombres aléatoires GNB de l'automate de liaison $A_B$, et l'information $I_B$ propre à l'individu B;

—chaque carte $C_A$, $C_B$ calcule alors un résultat $R=f(E_B, S, J)$ avec $J=p(I_A, I_B)$ pour la carte $C_A$ (soit $K_1$ ce résultat) et avec $J=p(I_B, I_A)$ pour la carte $C_B$ (soit $R_2$ ce résultat); en effet, l'algorithme p prend toujours comme premier paramètre l'information propre de la carte qui effectue le calcul et comme deuxième paramètre l'information reçue de l'autre carte;

—comme l'individu B cherche à certifier la provenance de l'information $I_A$, l'automate $A_B$ accouplé à la carte $C_B$ de l'individu B van demander en premier le résultat $K_1$ calculé par la carte $C_A$ à partir du nombre aléatoire $E_B$;

—ce résultat $K_1$ transmis par l'automate $A_A$ accouplé à la carte $C_A$ est comparé avec le résultat $R_2$ dans le circuit de comparaison CCB de l'automate $A_B$ accouplé à la carte $C_B$ de l'individu B.

En supposant que les individus A et B ne cherchent pas à frauder sur les informations tranmises et comme l'algorithme p est, selon une caractéristique essentielle de l'invention, un algorithme symétrique tel que $J=p(I_A, I_B)=p(I_B, I_A)$, les deux résultats $K_1$ et $R_2$ calculés seront identiques.

Si les deux résultats $K_1$ et $R_2$ sont identiques, l'individu B sera certain:

—d'une part, que la carte $C_A$ de l'individu A possède le même jeu secret S que sa carte $C_B$, c'est-à-dire que les deux cartes font partie d'une même population;

—et d'autre part, que l'information $I_A$ provient bien de la carte $C_A$.

On peut supposer que la carte $C_B$ fait partie d'un système informatique ou serveur susceptible de délivrer un service dès l'instant où il est certain de certifier la provenance d'une information transmise à partir d'une connectée à ce serveur.

Dans ces conditions, le système conforme à l'invention permet une reconnaissance à sens unique en toute sécurité.

Cependant, le système conforme à l'invention permet également une reconnaissance mutuelle entre les deux individus A et B précités. Pour cela, une fois que l'individu B a certifié la provenance de l'information propre à l'individu A, l'individu A doit s'assurer qu'il dialogue bien avec l'individu B. Pour cela, l'automate $A_A$ accouplé à la carte $C_A$ de l'individu A envoie, par exemple simultanément avec L'information $I_A$, un nombre aléatoire $E_A$, et la carte $C_A$ calcule un résultat $R_1=f(E_A, S, J)$ avec $J=p(I, I_B)$ alors que la carte $C_B$ calcule un résultat $K_2=f(E_A, S, J)$ avec $J=p(I_B, I_A)$.

Le comparateur CCA de l'automate $A_A$ relié à la carte $C_A$ de l'individu A compare alors les deux résultats $R_1$ et $K_2$. S'il y a identité entre ces deux résultats, l'individu A pourra certifier le provenance de l'information $I_B$.

Un tel système présente une très grande sécurité. Pour s'en convaincre, il suffit de simuler une tentative de fraude, Supposons que l'individu A, avec sa carte $C_A$, veuille se faire passer, vis-à-vis d'un individu B, pour individu X; ces trois individus A, X, B appartenant à une même population.

L'individu A ou fraudeur va substituer à son information propre $I_A$ telle que son identité enregistrée dans sa carte, l'identité $I_X$ qui identifie l'individu X et envoyer par l'automate $A_A$ cette identité $I_X$ à la carte $C_B$ de l'individu B.

Comme précédemment, l'automate $A_B$ accouplé à la carte de l'individu B envoie en retour l'identité $I_B$ et un nombre aléatoire $E_B$. Les deux cartes $C_A$ et $C_B$ calculent chacune un résultat $R=f(E_B, S, J)$ avec $J=p(I_A, I_B)$ pour la carte $C_A$ (soit $K_1$ ce résultat) et avec $J=p(I_B, I_X)$ pour la carte $C_B$ (soit $K_2$ ce résultat). L'automate $A_B$ accouplé à la carte $C_B$ de l'individu B demande ensuite le résultat $K_1$ calculé par la carte $C_A$ pour le comparer au résultat $R_2$ calculé par la carte $C_B$.

Si le fraudeur se contente uniquement de communiquer l'information $I_X$ à la place de sa véritable identité $I_A$, les deux résultats R calculés par les deux cartes $C_A$ et $C_B$ seront obligatoirement différents, étant donné que les deux paramètres J au niveau des deux cartes $C_A$ et $C_B$ sont différents l'un de l'autre.

Le fraudeur cherchera donc à déterminer à l'avance le résultat calculé par la carte $C_B$ une fois communiqué à cette dernière la fausse identité $I_X$. Aussi, il faut que le fraudeur substitue à l'information $I_B$ communiqué à sa carte $C_A$ par la carte $C_B$, une information $I_W$ telle que: $J=p(I_A, I_W)=p(I_B, I_X)$ de façon à ce que sa carte $C_A$ calcule le même résultat que la carte $C_B$.

Cela est impossible, car l'individu A ou fraudeur ne connaît pas les algorithmes f et p. De la même façon, l'individu B ne pourra faire croire à l'individu A qu'il est un autre individu X de la même population que lui.

En supposant que l'individu A, par indiscrétion, puisse connaître l'algorithme p, il lui est alors possible de calculer à l'avance le paramètre $J=p(I_B, I_X)$ et ainsi connaître à l'avance la valeur de $I_W$ à partir de l'équation $J=p(I_A, I_W)$.

Aussi, conformément à l'invention, l'algorithme p est avantageusement un algorithme du type "trappe" tel que: même si l'on connaît le résultat J et le paramètre $I_A$, il est impossible de retrouver, dans des délais en rapport avec la situation du dialogue, la valeur du second paramètre $I_W$.

Poure éviter au fraudeur de précalculer J et ainsi être certain que même en connaissant l'algorithme p, il lui sera impossible de précalculer le paramètre $I_W$, il est prévu selon l'invention d'inclure un paramètre supplémentaire dans le calcul de J. Avantageusement, ce paramètre supplémentaire est un nombre aléatoire $E_X$ constitué par une combinaison des deux nombres aléatoires $E_A$ et $E_B$ précités par exemple. Cette combinaison peut être obtenue en effectuant une opération logique "OU exclusif" sur les deux nombres $E_A$ et $E_B$.

Pour compléter l'inviolabilité du système, il est avantageux de prendre pour la fonction f un algorithme du type "trappe" pour éviter au fraudeur de pouvoir remonter au jeu secret S précité.

Dans les exemples décrits, si les informations à certifier $I_A$ et $I_B$ sont effectivement représentatives des identités des individus A et B, chaque individu pourra non seulement être certain de la provenance d'une information transmise par un autre individu, mais également être certain de l'identité portée dans la carte de l'autre individu. Mais bien évidemment, l'invention s'applique à la certification d'une information quelconque indépendamment de la signification de cette information. A la limite, cette information peut constituer un message. Ainsi, selon l'invention il est possible d'instaurer en toute sureté un dialogue même anonyme entre deux individus, à condition que ces individus appartiennent à une même population (même jeu secret S).

L'invention n'aborde pas le problème de la preuve de l'appartenance de la carte à son porteur, étant donné qu'il est connu que la présentation d'un code personnel d'habilitation (PIN code) suffit à prouver qu'il en est le titulaire légitime.

L'invention peut être au service non seulement d'individus, mais aussi de systèmes ce qui permet de l'appliquer aux relations entre des abonnés et un centre serveur sans que ce dernier ait besoin de consulter à chaque appel le fichier complet des abonnés, ce fichier ne pourrait même ne pas exister.

L'invention permet de certifier la provenance d'une information, cette information étant au préalable préenregistrée dans la mémoire d'une carte. Dans ces conditions, l'individu qui reçoit cette information a de bonnes raisons de croire en l'authenticité de cette information, si celle-ci a été controllée lors de son écriture et notamment écrite de façon permanente dans une zone protégée de la mémoire.

Selon un avantage important de l'invention, il n'est pas nécessaire de rendre inviolables les automates de dialogue en les plaçant dans des enceintes protégées, ce qui doit être le cas dans le système TELEPASS pour en augmenter la sécurité, mais cette solution est peu satisfaisante. En effet, le système TELEPASS n'est pas en mesure de déceler une intervention frauduleuse dans les automates (notamment au niveau de leur logiciel).

Selon l'invention, les comparateurs CCA et CCB situés dans les automates peuvent très bien être incorporés dans les cartes.

Les cartes d'une même population doivent être élaborées sur un même plan de fabrication (même masque et même code opérateur de commande).

## Revendications

1. Procédé pour certifier la provenance d'au moins une information $I_A$ enregistrée dans la mémoire d'un premier dispositif électronique $C_A$ détenu par un individu A, cette information $I_A$ propre à l'individu A étant transmise pour certification à un serveur B dont au moins une information propre $I_B$ est préenregistrée dans la mémoire d'un deuxième dispositif électronique $C_B$ associé au serveur; du type consistant:
—à transmettre l'information $I_A$ au dispositif $C_B$,
—à faire calculer au niveau de chaque dispositif $C_A$, $C_B$ un résultat R calculé par un même algorithme secret f prédéterminé et prenant en compte un même jeu secret S prédéterminé, un même nombre aléatoire $E_B$ fourni par le deuxième dispositif électronique $C_B$ et l'information $I_A$,
—à transmettre au second dispositif $C_B$ le résultat R calculé par le premier dispositif $C_A$,
—et à comparer, au niveau du deuxième dispositif $C_B$, les deux résultats R, l'identité entre ces deux résultats R certifiant au serveur B que le premier dispositif $C_A$ fait partie du même groupe que son dispositif $C_B$, du fait que les deux dispositifs contiennent le même jeu secret S et le même algorithme f,
caractérisé en ce qu'il consiste, pour permettre au serveur B d'être certain de la provenance de l'information $I_A$,
—à faire prendre en compte par l'algorithme f, un paramètre supplémentaire J qui prend lui-même en compte les deux informations $I_A$, $I_B$ combinées suivant un même algorithme secret p prédéterminé et échangées entre les deux dispositifs $C_A$, $C_B$;
—et ainsi à faire calculer par le premier dispositif $C_A$, un résultat $R = f(E_B, S, J)$ avec $J = p(I_A, I_B)$ et par le deuxième dispositif un résultat $R = f(E_B, S, J)$ avec $J = p(I_B, I_A)$, l'algorithme p étant symétrique de façon à ce que $J = p(I_A, I_B) = p(I_B, I_A)$, et pouvoir ainsi donner certitude au serveur B, dans le cas d'une égalité entre ces deux résultats R, que l'information $I_A$ n'a pas été modifiée au cours de son transfert depuis le premier dispositif $C_A$ et qu'elle provient exclusivement de ce premier dispositif $C_A$.

2. Procédé pour la reconnaissance mutuelle de deux individus (A, B) appartenant à une même organisation, l'individu A détenant un premier dispositif électronique $C_A$ dans la mémoire duquel est au moins enregistrée une information $I_A$ propre à l'individu A, l'individu B détenant un second dispositif électronique $C_B$ dans la mémoire duquel est au moins enregistrée une information $I_B$ propre à l'individu B; du type consistant:
—à transmettre l'information $I_A$ au second dispositif $C_B$,
—à faire calculer au niveau de chaque dispositif $C_A$, $C_B$ un résultat R calculé par un même algorithme secret f prédéterminé et prenant en compte un même jeu secret S prédéterminé, un même nombre aléatoires $E_B$ fourni pa le deuxième dispositif électronique $C_B$ et l'information $I_A$,
—à transmettre au second dispositif $C_B$ le résultat R calculé par le premier dispositif $C_A$,
—et à comparer, au niveau du deuxième dispositif $C_B$, les deux résultats R, l'identité entre ces deux résultats R certifiant à l'individu B que le premier dispositif $C_A$ fait partie du même groupe que son dispositif $C_B$, du fait que les deux dispositifs contiennent le même jeu secret S et le même algorithme f,
—à faire calculer au niveau de chaque dispositif $C_A$, $C_B$ un résultat R calculé par un même algorithme secret f prédéterminé et prenant en compte un même jeu secret S prédéterminé et un même nombre aléatoire $E_A$ fourni par le premier dispositif électronique $C_A$,

—et à comparer, au niveau du premier dispositif $C_A$, les deux résultats R, l'identité entre ces deux résultats R certifiant à l'individu A que le second dispositif $C_A$ fait partie du même groupe que son dispositif $C_A$, du fait que les deux dispositifs contiennent le même jeu secret S et le même algorithme f,

caractérisé en ce qu'il consiste, pour permettre à l'individu B d'être certain de la provenance de l'information $I_A$,

—à faire prendre en compte par l'algorithme f, un paramètre supplémentaire J qui prend lui-même en compte les deux informations $I_A$, $I_B$ combinées suivant un même algorithme secret p prédéterminé et échangées entre les deux dispositifs $C_A$, $C_B$;

—et ainsi à faire calculer par le premier dispositif $C_A$, un résultat $R=f(E_B, S, J)$ avec $J=p(I_A, I_B)$ et par le deuxième dispositif un résultat $R=(E_B, S, J)$, avec $J=p(I_A, I_B)$ et par le deuxième dispositif un résultat $(R=f(E_B, S, J)$ avec $J=p(I_B, I_A)$, l'algorithme p étant symétrique de façon à ce que $J=p(I_A, I_B)=p(I_B I_A)$, et pouvoir ainsi donner certitude à l'individu B, dans le cas d'une égalité entre ces deux résultats R, que l'information $I_A$ n'a pas été modifiée au cours de son transfert depuis le premier dispositif $C_A$ et qu'elle provient exclusivement de ce premier dispositif $C_A$;

et en ce qu'il consiste, pour permettre à l'individu A d'être certain de la provenance de l'information $I_B$,

—à faire prendre en compte par l'algorithme f, un paramètre supplémentaire J qui prend lui-même en compte les deux informations $I_A$, $I_B$ combinées suivant un même algorithme secret p prédéterminé et échangées entre les deux dispositifs $C_A$, $C_B$;

—et ainsi à faire calculer par le deuxième dispositif $C_B$, un résultat $R=f(E_A, S, J)$ avec $J=p(I_A, I_B)$ et par le premier dispositif $C_A$ un résultat $R=f(E_A, S, J)$ avec $J=p(I_B, I_A)$, l'algorithme p étant symétrique de façon à ce que $J=p(I_A, I_B)=p(I_B, I_A)$, et pouvoir ainsi donner certitude à l'individu A, dans le cas d'une égalité entre ces deux résultats R, que l'information $I_B$ n'a pas été modifiée au cours de sont transfert depuis le deuxième dispositif $C_B$ et qu'elle provient exclusivement de ce deuxième dispositif $C_B$. '

3. Procédé selon la revendication 1 ou 2, caractérisé en ce qu'il consiste à prendre pour l'algorithme p précité un algorithme du type "trappe".

4. Procédé selon la revendication 1 ou 2, caractérisé en ce qu'il consiste à faire prendre en compte par l'algorithme secret p précité un paramètre supplémentaire $E_x$ qui est une combinaison prédéterminée des deux nombres aléatoires $E_A$ et $E_B$ précités.

**Patentansprüche**

1. Verfahren zum Nachweis der Herkunft mindestens einer Information $I_A$, die im Speicher einer ersten elektronischen Vorrichtung $C_A$, die im Besitz eines Individuums A ist, gespeichert ist, wobei diese dem Individuum A eigene Information $I_A$ zum Nachweis einer Bedienungseinheit B übermittelt wird, von der mindestens eine eigene Information $I_B$ im Speicher einer zweiten, der Bedienungseinheit zugeordneten elektronischen Vorrichtung $C_B$ vorgespeichert ist; der Art, die daraus besteht, daß:

—der Vorrichtung $C_B$ die Information $I_A$ übermittelt wird,

—an jeder Vorrichtung $C_A$, $C_B$ die Berechnung eines Ergebnisses R veranlaßt wird, das durch einen gleichen, vorbestimmten Geheimalgorithmus f berechnet ist und das einen gleichen, vorbestimmten, geheimen Satz S, eine gleiche, von der zweiten elektronischen Vorrichtung $C_B$ gelieferte Zufallszahl $E_B$ und die Information $I_A$ berücksichtigt,

—der zweiten Vorrichtung $C_B$ das von der ersten Vorrichtung $C_A$ berechnete Ergebnis R übermittelt wird,

—une die beiden Ergebnisse R an der zweiten Vorrichtung $C_B$ verglichen werden, wobei die Gleichheit beider Ergebnisse R dem Bedienungselement B nachweist, daß die erste Vorrichtung $C_A$ Teil derselben Gruppe wie seine Vorrichtung $C_B$ ist, aufgrund der Tatsache, daß beide Vorrichtungen den gleichen geheimen Satz S und den gleichen Algorithmus f enthalten,

dadurch gekennzeichnet, daß es, damit sich das Bedienungselement B der Herkunft der Information $I_A$ sicher sein kann, daraus besteht, daß

—durch den Algorithmus f die Berücksichtigung eines zusätzlichen Parameters J veranlaßt wird, der seinerseits die zwei Informationen $I_A$, $I_B$, die nach einem gleichen, vorbestimmten Geheimalgorithmus p zusammengefügt sind und zwischen den beiden Vorrichtungen $C_A$, $C_B$ ausgetauscht werden, berücksichtigt;

—und somit durch die erste Vorrichtung $C_A$ ein Ergebnis $R=f(E_B, S, J)$, wobei $J=p(I_A, I_B)$, und durch die zweite Vorrichtung ein Ergebnis $R=f(E_B, S, J)$, wobei $J=p(I_B, I_A)$, berechnet wird, wobei der Algorithmus p symmetrisch ist, so daß $J=p(I_A, I_B)=p(I_B, I_A)$, und dem Bedienungselement B auf diese Weise, im Falle der Gleichheit zwischen beiden Ergebnissen R, die Sicherheit gegeben werden kann, daß die Information $I_A$ während ihrer Übertragung von der ersten Vorrichtung $C_A$ nicht verändert wurde und daß sie ausschließlich von der ersten Vorrichtung $C_A$ stammt.

2. Verfahren zur gegenseitigen Erkennung zweier zu einer selben Organisation gehöriger Individuen (A, B), wobei das Individuum A im Besitz einer ersten elektronischen Vorrichtung $C_A$, in deren Speicher mindestens eine dem Individuum A eigene Information $I_A$ gespeichert ist, das Individuum B im Besitz einer zweiten elektronischen Vorrichtung $C_B$ ist, in deren Speicher mindestens eine dem Individuum B eigene Information $I_B$ gespeichert, ist; von der Art, die daraus besteht, daß:

—der zweiten Vorrichtung $C_B$ die Information $I_A$ übermittelt wird,

—veranlaßt wird, daß an jeder Vorrichtung $C_A$,

15       **0 100 260**       16

$C_B$ ein Ergebnis R berechnet wird, das durch einen gleichen, vorbestimmten Geheimalgorithmus f berechnet ist und einen gleichen, vorbestimmten, geheimen Satz S, eine gleiche, von der zweiten elektronischen Vorrichtung $C_B$ gelieferte Zufallszahl $E_B$ und die Information $I_A$ berücksichtigt,

—der zweiten Vorrichtung $C_B$ das durch die erste Vorrichtung $C_A$ berechnete Ergebnis R übermittelt wird,

—und an der zweiten Vorrichtung $C_B$ die beiden Ergebnisse R verglichen werden, wobei die Gleichheit der beiden Ergebnisse R dem Individuum B nachweist, daß die erste Vorrichtung $C_A$ Teil derselben Gruppe wie seine Vorrichtung $C_B$ ist, aufgrund der Tatsache, daß beide Vorrichtungen denselben geheimen Satz S und denselben Algorithmus f enthalten,

—an jeder Vorrichtung $C_A$, $C_B$ die Berechnung eines Ergebnisses R veranlaßt wird, das durch einen gleichen, vorbestimmten Geheimalgorithmus f berechnet wird und einen gleichen, vorbestimmten, geheimen Satz S und eine gleiche, von der ersten elektronischen Vorrichtung $C_A$ gelieferte Zufallszahl $E_A$ berücksichtigt,

—die beiden Ergebnisse R and der ersten Vorrichtung $C_A$ verglichen werden, wobei die Gleichheit beider Ergebnisse R dem Individuum A nachweist, daß die zweite Vorrichtung $C_A$ Teil derselben Gruppe wie seine Vorrichtung $C_A$ ist, aufgrund der Tatsache, daß beide Vorrichtungen den gleichen, geheimen Satz S und den gleichen Algorithmus f enthalten,

dadurch gekennzeichnet, daß es, damit sich das Individuum B der Herkunft der Information $I_A$ sicher sein kann, daraus besteht, daß

—veranlaßt wird, daß durch den Algorithmus f ein zusätzlicher Parameter J berücksichtigt wird, der seinerseits die beiden Informationen $I_A$, $I_B$ berücksichtigt, die nach einem gleichen, vorbestimmten Geheimalgorithmus p zusammengefügt sind und zwischen den beiden Vorrichtungen $C_A$, $C_B$ ausgetauscht werden;

—und auf diese Weise durch die erste Vorrichtung $C_A$ ein Ergebnis R=f ($E_B$, S, J), wobei J=p ($I_A$, $I_B$), durch die zweite Vorrichtung ein Ergebnis R=($E_B$, S, J), wobei J=p ($I_B$, $I_A$), und durch die zweite Vorrichtung ein Ergebnis R=f ($E_B$, S, J), wobei J=p ($I_B$, $I_A$), berechnet wird, wobei der Algorithmus p symmetrisch ist, so daß J=p ($I_A$, $I_B$)=p ($I_B$, $I_A$), und auf diese Weise dem Individuum B, im Falle der Gleichheit beider Ergebnisse R, die Sicherheit gegeben werden kann, daß die Information $I_A$ im Verlauf ihrer Übertragung von der ersten Vorrichtung $C_A$ nicht verändert worden ist und daß sie ausschließlich von dieser ersten Vorrichtung $C_A$ stammt;

und daß sie, damit sich das Individuum A der Herkunft der Information $I_B$ sicher sein kann, daraus besteht, daß:

—durch den Algorithmus f die Berücksichtigung eines zusätzlichen Parameters J veranlaßt wird, der seinerseits die zwei Informationen $I_A$, $I_B$, die nach einem gleichen, vorbestimmten Geheimalgorithmus p zusammengefügt sind und zwischen den beiden Vorrichtungen $C_A$, $C_B$ ausgetauscht werden, berücksichtigt;

—und somit durch die zweite Vorrichtung $C_B$ ein Ergebnis R=f ($E_A$, S, J), wobei J=p ($I_A$, $I_B$), und durch die erste Vorrichtung $C_A$ ein Ergebnis R=f ($E_A$, S, J), wobei J=p ($I_B$, $I_A$), berechnet wird, wobei der Algorithmus p symmetrisch ist, so daß J=p ($I_A$, $I_B$)=p ($I_B$, $I_A$), und dem Individuum A auf diese Weise, im Falle der Gleichheit zwischen beiden Ergebnissen R, die Sicherheit gegeben werden kann, daß die Information $I_B$ während ihrer Übertragung von der zweiten Vorrichtung $C_B$ nicht verändert wurde und daß sie ausschließlich von der zweiten Vorrichtung $C_B$ stammt.

3. Verfahren nach Anspruch 1 oder 2, dadurch gekennzeichnet, daß es daraus besteht, für den vorher genannten Algorithmus p einen Algorithmus vom "Fallentyp" zu nehmen.

4. Verfahren nach Anspruch 1 oder 2, dadurch gekennzeichnet, daß es daraus besteht, daß der vorher genannte Geheimalgorithmus p veranlaßt wird, einen zusätzlichen Parameter $E_x$ zu berücksichtigen, der eine vorbestimmte Kombination der beiden vorher genannten Zufallszahlen $E_A$ und $E_B$ ist.

**Claims**

1. Method of authenticating the origin of at least one datum $I_A$ recorded in the memory of a first electronic device $C_A$ held by a person A, this datum $I_A$ specific to the person A being transmitted for authentication to a service facility B of which at least one intrinsic datum $I_B$ is prerecorded in the memory of a second electronic device $C_B$ allocated to the service facility of the kind consisting in:

—transmitting the datum $I_A$ to the device $C_B$,

—causing the calculation at the level of each device $C_A$, $C_B$ a result R calculated by means of an identical and predetermined secret algorithm f and whilst taking into account an identical predetermined and secret action S, an identical random number $E_B$ supplied by the second electronic device $C_B$ and the datum $I_A$,

—transmitting the result R calculated by means of the first device $C_A$ to the second device $C_B$,

—and comparing the two results R at the level of the second device $C_B$, the identity between these two results R confirming to the service facility B that the first device $C_A$ forms part of the same group as its device $C_B$, since both devices contain the same secret action S and the same algorithm f,

—characterised in that for the purpose of enabling the service facility B to be certain of the origin of the datum $I_A$, it comprises:

—causing the algorithm f to make allowance for a supplemental parameter J which for its part takes into account the two data $I_A$, $I_B$ combined in accordance with an identical secret algorithm p, and exchanged between the two devices $C_A$, $C_B$;

9

—and thus causing the first device $C_A$ to calculate a result $R=f(E_B, S, J)$, with $J=p(I_A, I_B)$, the algorithm p being symmetrical, in such manner than $J=p(I_A, I_B)=p(I_B, I_A)$, thus being enabled to provide the service facility B with the assurance, in the case of equality between these two results R, that the datum $I_A$ had not been altered during its transfer from the first device $C_A$ and that it originates wholly from this first device $C_A$.

2. Method for mutual recognition of two persons (A, B) belonging to one and the same organisation, the person A holding a first electronic device $C_A$ in the memory of which is recorded at least one datum intrinsic to the person A, the person B holding a second electronic device $C_B$ in the memory of which is recorded at least one datum $I_B$ intrinsic to the person B, of the kind consisting in:

—transmitting the datum $I_A$ to the second device $C_B$,

—causing the calculation—at the level of each device $C_A$, $C_B$—of a result R calculated by means of an identical predetermined and secret algorithm f and allowing for a predetermined identical secret action or program S, an identical random number $E_B$ supplied by the second electronic device $C_B$, and the datum $I_A$,

—transmitting the result R calculated by means of the first device $C_A$ to the second device $C_B$,

—and comparing the two results R at the level or stage of the second device $C_B$, the identity between these two results R attesting to the .person B that the first device $C_A$ forms part of the same group as his device $C_B$, since the two devices contain the same secret program S and the same algorithm f,

—causing the calculation—at the level of each device $C_A$, $C_B$—of a result R calculated by means of a predetermined and identical secret algorithm f, and taking into account an identical, predetermined and secret program S and an identical random number $E_A$ supplied by the first electronic device $C_A$,

—and comparing the two results R at the level of the first device $C_A$, the identity between these two results R assuring the person A that the second device $C_A$ forms part of the same group as its device $C_A$, since the two devices contain the same secret program or code S and the same algorithm f, characterised in that for the purpose of enabling the person B to be certain of the origin of the datum $I_A$, it consists in;

—causing the algorithm f to make allowance for a supplemental parameter J which for its part takes into account the two data $I_A$, $I_B$ combined according to an identical, predetermined and secret algorithm p, and exchanged between the two devices $C_A$, $C_B$;

—and thus causing the first device $C_A$ to calculate a result $R=f(E_B, S. J)$ with $J=p(I_A, I_B)$, and the second device to calculate a result $R=(E_B, S, J)$ with $J=p(I_A, I_B)$, and the second device to calculate a result $R=f(E_B, S, J)$ with $J=p(I_B, I_A)$, the algorithm p being symmetrical in such manner that $J=p(I_A, I_B)=p(I_B, I_A)$, and thus being enabled to assure the person B—in the case of equality between these two results R—that the datum $I_A$ had not been altered during its transfer from the first device $C_A$ and that it originates solely from this first device $C_A$;

and in that, for the purpose of enabling the person A to be certain of the origin of the datum $I_B$, it consists in;

—causing the algorithm f to make allowance for a supplemental parameter J which for its part takes into account the two data $I_A$, $I_B$ combined according to one and the same predetermined and secret algorithm p and exchanged between the two devices $C_A$, $C_B$;

—and thus causing the second device $C_B$ to calculate a result $R=f(E_A, S, J)$ with $J=p(I_A, I_B)$ and the first device $C_A$ to calculate a result $R=f(E_A, S, J)$ with $J=p(I_B, I_A)$, the algorithm p being symmetrical in such manner that $J=p(I_A, I_B)=p(I_B, I_A)$, and thereby being enabled to provide the person A with the assurance that—in the case of equality between these two results R—the datum $I_B$ had not been altered during its transfer from the second device $C_B$ and that it originates solely from this second device $C_B$.

3. Method according to claim 1 or 2, characterised in that it consists in adopting an algorithm of the "trap" type for the aforesaid algorithm p.

4. Method according to claim 1 or 2, characterised in that it consists in causing the aforesaid predetermined and secret algorithm p to take into account a supplemental parameter $E_x$ which is a predetermimed combination of the two aforesaid random numbers $E_A$ and $E_B$.